(19) Europäisches Patentamt
European Patent Office
Office européen des brevets

(11) **EP 4 234 607 A1**

(12) **EUROPEAN PATENT APPLICATION**
published in accordance with Art. 153(4) EPC

(43) Date of publication:
**30.08.2023 Bulletin 2023/35**

(21) Application number: **21886553.3**

(22) Date of filing: **14.09.2021**

(51) International Patent Classification (IPC):
***C08G 63/60*** (2006.01)　　　***C08G 63/78*** (2006.01)

(52) Cooperative Patent Classification (CPC):
**C08G 63/60; C08G 63/78;** Y02W 30/62

(86) International application number:
**PCT/KR2021/012491**

(87) International publication number:
**WO 2022/092558 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.10.2020 KR 20200139421**

(71) Applicant: **SK Chemicals Co., Ltd.
Seongnam-si, Gyeonggi-do 13494 (KR)**

(72) Inventors:
- **HWANG, Da-Young
  Seongnam-si, Gyeonggi-do 13494 (KR)**
- **LEE, Yoo Jin
  Seongnam-si, Gyeonggi-do 13494 (KR)**

(74) Representative: **Berggren Oy
P.O. Box 16
Eteläinen Rautatiekatu 10A
00101 Helsinki (FI)**

(54) **PRODUCTION METHOD FOR POLYESTER COPOLYMER COMPRISING RECYCLED MONOMERS**

(57)　The present disclosure relates to a method for preparation of a polyester copolymer including recycled monomers, and to a method for preparation of a polyester copolymer having excellent quality while using recycled monomers.

**EP 4 234 607 A1**

**Description**

**[TECHNICAL FIELD]**

The present disclosure relates to a method for preparation of a polyester copolymer including recycled monomers, and to a method for preparation of a polyester copolymer having excellent quality while using recycled monomers.

**[BACKGROUND OF ART]**

Since polyester resins have superior mechanical strength, heat resistance, transparency and gas barrierability, the polyester resin is suitable for a container for beverage, a packing film, or a material of an audio/video film and thus used in volume. In addition, it is widely produced worldwide as industrial materials such as medical fibers and tire cords. Sheets or boards of polyester have good transparency and excellent mechanical strength, so they are widely used as materials for cases, boxes, partitions, store shelves, protection panels, blister packing, construction materials, interior or exterior materials, and the like.

Waste plastics, which account for about 70% of marine pollution, have recently emerged as a serious social problem, and each country regulates the use of disposable plastics while promoting reuse of waste plastics. There are two main methods to recycle the waste plastics. In one method, waste plastics are collected, crushed and washed, and then melt-extruded and re-pelletized to be reused as raw materials. In another method, a material obtained by depolymerization is used as a monomer for plastic synthesis. In the case of the latter method, bis-2-hydroxyethyl terephthalate can be obtained by depolymerization of PET or PETG in waste plastics, and studies are underway to use it as a monomer for a polyester copolymer.

However, it is very difficult to provide good-quality materials due to foreign substances in the waste plastics. In particular, plastics made from materials obtained by depolymerization of waste plastics often suffer from quality degradation.

**[DETAILED DESCRIPTION OF THE INVENTION]**

**[Technical Problem]**

With the above background, the present disclosure relates to a method for preparation of a polyester copolymer including recycled monomers, and to a method for preparation of a polyester copolymer having excellent quality while using recycled monomers.

**[Technical Solution]**

In order to solve the above problems, there is provided a method for preparation of a polyester copolymer including the following steps:

1) preparing a recycled bis-2-hydroxyethyl terephthalate solution by dissolving recycled bis-2-hydroxyethyl terephthalate in water or ethylene glycol (step 1);
2) preparing an oligomer by an esterification reaction of the recycled bis-2-hydroxyethyl terephthalate solution, a dicarboxylic acid or its derivative, and a diol containing ethylene glycol and a comonomer (step 2); and
3) preparing a polyester copolymer by a polycondensation reaction of the oligomer (step 3),

wherein a molar ratio of the diol and the dicarboxylic acid or its derivative is 0.2:1 to 1.35:1.

Hereinafter, the present invention will be described in detail for each step.

**(Step 1)**

The step 1 of the present disclosure is a step of preparing a recycled bis-2-hydroxyethyl terephthalate solution by dissolving recycled bis-2-hydroxyethyl terephthalate in water or ethylene glycol.

As used herein, the term 'recycled bis-2-hydroxyethyl terephthalate' refers to a material obtained from waste plastics collected after use. Examples of waste plastics from which bis-2-hydroxyethyl terephthalate can be obtained include PET and PETG. For example, bis-2-hydroxyethyl terephthalate can be obtained from PEG collected after use by methods such as glycolysis, hydrolysis, methanolysis, and the like, and such methods are well known in the art.

In the process of obtaining the recycled bis-2-hydroxyethyl terephthalate from waste plastics, the recycled bis-2-hydroxyethyl terephthalate is subjected to several chemical steps, so that product quality is inevitably deteriorated when used as a monomer of a copolymer. In particular, when used as a monomer of the polyester copolymer, there is a problem in that color quality is deteriorated.

Therefore, the present disclosure is characterized in that the recycled bis-2-hydroxyethyl terephthalate is used as a main monomer constituting the polyester copolymer according to the present disclosure, and especially used for the preparation of a polyester copolymer after being dissolved in water or ethylene glycol to prepare a uniform solution. Through this, it is possible to increase reaction efficiency of the esterification reaction to be described later, and also to induce a uniform reaction to suppress the deterioration of color quality of the polyester copolymer.

The concentration of the recycled bis-2-hydroxyethyl terephthalate solution ((recycled bis-2-hydroxyethyl terephthalate)/(recycled bis-2-hydroxyethyl terephthalate solution + water or ethylene glycol)) may preferably be 25 to 99 wt %. When the concentration is less than 25 wt%, the reaction efficiency is lowered due to the low concentration of recycled bis-2-hydroxyethyl terephthalate. When the concentration exceeds 99 wt%, it is difficult to induce a uniform esterification reaction due to the high concentration of recycled bis-2-hydroxyethyl terephthalate.

In the case of dissolving the recycled bis-2-hydroxyethyl terephthalate in water, step 1 is preferably performed at 25 to 100 °C. In addition, in the case of dissolving the recycled bis-2-hydroxyethyl terephthalate in ethylene glycol, step 1 is preferably performed at 25 to 197 °C.

**(Step 2)**

The step 2 of the present disclosure is a step of preparing an oligomer by an esterification reaction of the recycled bis-2-hydroxyethyl terephthalate solution prepared in step 1, a dicarboxylic acid or its derivative, and a diol containing ethylene glycol and a comonomer.

The dicarboxylic acid or its derivative used in the present disclosure refers to a main monomer constituting the polyester copolymer together with the diol component. In particular, the dicarboxylic acid includes terephthalic acid, and physical properties such as heat resistance, chemical resistance, and weather resistance of the polyester copolymer according to the present disclosure may be improved by terephthalic acid. In addition, the terephthalic acid derivative may be terephthalic acid alkyl ester, preferably dimethylterephthalic acid.

The dicarboxylic acid may further include an aromatic dicarboxylic acid, an aliphatic dicarboxylic acid, or a mixture thereof in addition to terephthalic acid. In this case, the dicarboxylic acid other than terephthalic acid is preferably included in 1 to 30 wt% based on a total weight of the total dicarboxylic acid component.

The aromatic dicarboxylic acid component may be an aromatic dicarboxylic acid having 8 to 20 carbon atoms, preferably 8 to 14 carbon atoms, or a mixture thereof. Specific examples of the aromatic dicarboxylic acid include isophthalic acid, naphthalenedicarboxylic acid such as 2,6-naphthalenedicarboxylic acid, diphenyl dicarboxylic acid, 4,4'-stilbenedicarboxylic acid, 2,5-furandicarboxylic acid, 2,5-thiophenedicarboxylic acid, and the like, but are not limited thereto. The aliphatic dicarboxylic acid component may be an aliphatic dicarboxylic acid component having 4 to 20 carbon atoms, preferably 4 to 12 carbon atoms, or a mixture thereof. Specific examples of the aliphatic dicarboxylic acid include linear, branched or cyclic aliphatic dicarboxylic acid components including cyclohexanedicarboxylic acid such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, and azelaic acid, but are not limited thereto.

The diol component used in the present disclosure refers to a main monomer constituting the polyester copolymer together with the above-described dicarboxylic acid or its derivative. In particular, the diol component contains ethylene glycol and a comonomer, and the comonomer includes cyclohexanedimethanol, or isosorbide.

The ethylene glycol is a component that contributes to improving transparency and impact strength of the polyester copolymer. Preferably, the ethylene glycol may be used in an amount of 5 to 100 moles based on 100 moles of the total diol component.

The cyclohexanedimethanol (e.g., 1,2-cyclohexanedimethanol, 1,3-cyclohexanedimethanol or 1,4-cyclohexanedimethanol) is a component that contributes to improving transparency and impact strength of the polyester copolymer to be prepared. Preferably, the cyclohexanedimethanol may be used in an amount of 5 to 90 moles based on 100 moles of the residue of the total diol component.

The isosorbide is used to improve processability of the polyester copolymer to be prepared. Although the diol of cyclohexanedimethanol and ethylene glycol improves the transparency and impact resistance of the polyester copolymer, shear thinning characteristics should be improved and a crystallization rate should be lowered for improving processability. However, it is difficult to achieve these effects using only the cyclohexanedimethanol and ethylene glycol. When containing isosorbide as the diol component, the shear thinning characteristics are improved and the crystallization rate is lowered while the transparency and impact strength are maintained, thereby improving the processability of the polyester copolymer to be prepared. Preferably, the isosorbide may be used in an amount of 0.1 to 50 moles based on 100 moles of the total diol component.

Meanwhile, in the esterification reaction of step 2 in the present disclosure, a molar ratio of the diol and the dicarboxylic acid or its derivative is adjusted to 0.2:1 to 1.35:1 in order to suppress the deterioration of quality of the polyester copolymer due to the use of recycled bis-2-hydroxyethyl terephthalate. Herein, the 'molar ratio' means a molar ratio between materials used in the esterification reaction of the polyester copolymer. When the molar ratio is more than 1.35, there is a problem in that the molar ratio of the diol is high and thus more by-products derived from the diol component are generated, and when the molar ratio is less than 0.2, the residue content of recycled bis-2-hydroxyethyl terephthalate becomes relatively high, resulting in deterioration of color quality and transparency of the polyester copolymer.

In addition, in step 2, a molar ratio of the comonomer and ethylene glycol (comonomer: ethylene glycol) may preferably be 0.1:1 to 20:1. Herein, the 'molar ratio' means a molar ratio between materials used in the esterification reaction of the polyester copolymer. When the molar ratio is less than 0.1, there is a problem in that transparency and impact resistance of the polyester copolymer are lowered. When the molar ratio is more than 20, more by-products are generated, which is a factor of deterioration of quality of the polyester copolymer.

Meanwhile, as will be described later, the polyester copolymer prepared according to the present disclosure includes 1 to 80 wt% of the residue of recycled bis-2-hydroxyethyl terephthalate. To this end, the concentration of the recycled bis-2-hydroxyethyl terephthalate solution prepared in step 1 is adjusted as described above. When the residue of the recycled bis-2-hydroxyethyl terephthalate is less than 1 wt%, the content of the above-mentioned diol is relatively high, and accordingly, more by-products derived from the diol component, especially by-products derived from ethylene glycol, are generated, resulting in deterioration of the quality of the polyester copolymer. In addition, when the residue of the recycled bis-2-hydroxyethyl terephthalate is more than 80 wt%, there is a problem in that the color quality and transparency of the polyester copolymer are deteriorated.

The esterification reaction may be performed at a pressure of 0.1 to 3.0 kg/cm$^2$ and a temperature of 200 to 300 °C. The conditions of the esterification reaction may be appropriately adjusted according to specific characteristics of the polyester to be prepared, the ratio of each component, or process conditions. Specifically, the temperature of the esterification reaction may be 240 to 295 °C, more preferably 245 to 275 °C.

The esterification reaction may be performed in a batch or continuous manner. The respective raw materials may be separately added, or they are added in the form of a slurry by mixing the diol component with the dicarboxylic acid component and recycled bis-2-hydroxyethyl terephthalate solution. In addition, a diol component such as isosorbide, which is a solid component at room temperature, may be dissolved in water or ethylene glycol, and then mixed with a dicarboxylic acid component such as terephthalic acid to form a slurry. Alternatively, after the isosorbide is melted at 60 °C or higher, a slurry may be prepared by mixing a dicarboxylic acid component such as terephthalic acid and other diol components. In addition, water may be added to the mixed slurry to help increase fluidity of the slurry.

Preferably, the esterification reaction of step 2 is performed for 2 hours to 10 hours. The reaction time affects quality of the finally prepared polyester copolymer, and when the reaction time is less than 2 hours or more than 10 hours, color quality of the finally prepared polyester copolymer is deteriorated.

Meanwhile, the esterification reaction may use a catalyst including a titanium-based compound, a germanium-based compound, an antimony-based compound, an aluminum-based compound, a tin-based compound, or a mixture thereof.

Examples of the titanium-based compound may include tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoacetic ester titanate, isostearyl titanate, titanium dioxide, and the like. Examples of the germanium-based compound may include germanium dioxide, germanium tetrachloride, germanium ethyleneglycoxide, germanium acetate, a copolymer thereof, and a mixture thereof. Preferably, germanium dioxide may be used, and the germanium dioxide may be in a crystalline or amorphous form. Glycol soluble germanium dioxide may be also used.

**(Step 3)**

The step 3 of the present disclosure is a step of preparing a polyester copolymer by a polycondensation reaction of the oligomer.

The polycondensation reaction may be performed by reacting the esterification product at a temperature of 240 to 300 °C and a pressure of 400 to 0.01 mmHg. In addition, the polycondensation reaction may be performed for 1 to 10 hours.

The temperature and pressure conditions of the polycondensation reaction enable the removal of glycol, which is a by-product of the polycondensation reaction, from the system. In addition, when the polycondensation reaction is performed within the reaction time above, the intrinsic viscosity of the final product may reach an appropriate level.

**Polyester copolymer**

In addition, there is provided a polyester copolymer prepared according to the preparation method of the present disclosure described above.

Meanwhile, the polyester copolymer according to the present disclosure may have an intrinsic viscosity of 0.50 to 1.0 dl/g, preferably 0.50 to 0.85 dl/g, and more preferably 0.55 to 0.80 dl/g. The method for measuring the intrinsic viscosity will be specified in Examples to be described later.

In addition, the polyester copolymer according to the present disclosure preferably has Pellet color L-b of 60 to 70. The method for measuring the Pellet color L-b will be specified in Examples to be described later.

**[ADVANTAGEOUS EFFECTS]**

As describe above, the present disclosure relates to a method for preparation of a polyester copolymer including recycled monomers, and to a method for preparation of a polyester copolymer having excellent quality while using recycled monomers.

**[DETAILED DESCRIPTION OF THE EMBODIMENTS]**

Hereinafter, preferred examples are presented to help the understanding of the present invention. However, the following examples are provided only for easier understanding of the present invention, and the present invention is not limited thereto.

**Example 1**

**Step 1) Preparation of r-BHET solution**

Recycled bis-2-hydroxyethyl terephthalate (1269.7 g; hereinafter, referred to as 'r-BHET') and water (200 g) were uniformly mixed at 70 °C to prepare an r-BHET solution (86.39 wt%).

**Step 2) Esterification**

The above-prepared r-BHET solution, TPA (terephthalic acid; 2361.8 g), EG (ethylene glycol; 673.5 g), CHDM (1,4-cyclohexanedimethanol; 221.5 g), and ISB (isosorbide; 98.2 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (0.7 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded for 245 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.55 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.70 dl/g to prepare a polyester copolymer.

**Example 2**

**Step 1) Preparation of r-BHET solution**

r-BHET (3461.1 g) and water (3000 g) were uniformly mixed at 45 °C to prepare an r-BHET solution (53.57 wt%).

**Step 2) Esterification**

The above-prepared r-BHET solution, TPA (969.4 g), EG (12.1 g), CHDM (140.2 g), and ISB (113.7 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (0.7 g) as a coloring agent were added thereto.

Then, nitrogen was injected into the reactor to form a pressurized state in which the pressure of the reactor was higher than normal pressure by 2.0 kgf/cm$^2$ (absolute pressure: 2231.1 mmHg). Then, the temperature of the reactor was raised to 220 °C over 90 minutes, maintained at 220 °C for 2 hours, and then raised to 260 °C over 2 hours. Thereafter, an esterification reaction proceeded for 203 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.95 dl/g to prepare a polyester copolymer.

**Example 3**

**Step 1) Preparation of r-BHET solution**

r-BHET (4019.2 g) and water (1500 g) were uniformly mixed at 100 °C to prepare an r-BHET solution (72.82 wt%).

**Step 2) Esterification**

The above-prepared r-BHET solution, TPA (875.6 g), EG (39.2 g), and CHDM (121.5 g) were placed in a 10 L reactor to which a column, and a condenser capable of being cooled by water were connected, and $TiO_2/SiO_2$ copolymer (0.5 g) as a catalyst, phosphoric acid (1.46 g) as a stabilizer, Polysynthren Blue RLS (manufactured by Clarient, 0.016 g) as a blue toner, and Solvaperm Red BB (manufactured by Clarient, 0.004 g) as a red toner were added thereto.

Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 260 °C over 2 hours. Thereafter, an esterification reaction proceeded for 143 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 210 °C at a rate of 40 °C/hour, and maintained at 210 °C. The solid-phase polymerization reaction was performed until the intrinsic viscosity (IV) of the particles in the reactor reached 0.80 dl/g to prepare a polyester copolymer.

**Example 4**

**Step 1) Preparation of r-BHET solution**

r-BHET (795.8 g) and water (1900 g) were uniformly mixed at 30 °C to prepare an r-BHET solution (29.52 wt%).

**Step 2) Esterification**

The above-prepared r-BHET solution, TPA (3814.0 g), EG (1554.0 g), and CHDM (188.0 g) were placed in a 10 L reactor to which a column, and a condenser capable of being cooled by water were connected, and $TiO_2/SiO_2$ copolymer (0.5 g) as a catalyst, phosphoric acid (1.46 g) as a stabilizer, and cobalt acetate (1.1 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 250 °C over 2 hours. Thereafter, an esterification reaction proceeded for 387 minutes until the mixture in the reactor became transparent with the naked eye while maintaining the temperature of the reactor at 250 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 265 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.55 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 220 °C at a rate of 40 °C/hour, and maintained at 220 °C. The solid-phase polymerization reaction was performed until the intrinsic viscosity (IV) of the particles in the reactor reached 0.85 dl/g to prepare a polyester copolymer.

**Example 5**

**Step 1) Preparation of r-BHET solution**

r-BHET (2439.2 g) and water (300 g) were uniformly mixed at 55 °C to prepare an r-BHET solution (89.05 wt%).

**Step 2) Esterification**

The above-prepared r-BHET solution, TPA (1471.5 g), EG (68.7 g), and CHDM (797.8 g) were placed in a 10 L reactor to which a column, and a condenser capable of being cooled by water were connected, and $TiO_2/SiO_2$ copolymer(1.0 g) as a catalyst, phosphoric acid (1.46 g) as a stabilizer, and cobalt acetate (0.8 g) as a coloring agent were added thereto.
Then, nitrogen was injected into the reactor to form a pressurized state in which the pressure of the reactor was higher than normal pressure by 2.0 $kgf/cm^2$ (absolute pressure: 2231.1 mmHg). Then, the temperature of the reactor was raised to 220 °C over 90 minutes, maintained at 220 °C for 2 hours, and then raised to 255 °C over 2 hours. Thereafter, an esterification reaction proceeded for 360 minutes until the mixture in the reactor became transparent with the naked eye while maintaining the temperature of the reactor at 255 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 285 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Example 6**

**Step 1) Preparation of r-BHET solution**

r-BHET (1852.6 g) and EG (60 g) were uniformly mixed at 195 °C to prepare an r-BHET solution (96.86 wt%).

**Step 2) Esterification**

The above-prepared r-BHET solution, TPA (1816.1 g), EG (279.2 g), and CHDM (525.1 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (1.0 g) as a coloring agent were added thereto.
Then, nitrogen was injected into the reactor to form a pressurized state in which the pressure of the reactor was higher than normal pressure by 1.5 $kgf/cm^2$ (absolute pressure: 1715.5 mmHg). Then, the temperature of the reactor was raised to 220 °C over 90 minutes, maintained at 220 °C for 2 hours, and then raised to 250 °C over 2 hours. Thereafter, an esterification reaction proceeded for 139 minutes until the mixture in the reactor became transparent with the naked eye while maintaining the temperature of the reactor at 250 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 270 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

## Example 7

### Step 1) Preparation of r-BHET solution

r-BHET (1132.4 g) and water (1200 g) were uniformly mixed at 40 °C to prepare an r-BHET solution (48.55 wt%).

### Step 2) Esterification

The above prepared r-BHET solution, TPA (2220.2 g), EG (265.4 g), CHDM (1284.0 g), and ISB (156.2 g) were placed in a 10 L reactor to which a column, and a condenser capable of being cooled by water were connected, and $GeO_2$ (1.0 g) as a catalyst, phosphoric acid (1.46 g) as a stabilizer, Polysynthren Blue RLS (manufactured by Clarient, 0.013 g) as a blue toner, and Solvaperm Red BB (manufactured by Clarient, 0.004 g) as a red toner were added thereto.
Then, nitrogen was injected into the reactor to form a pressurized state in which the pressure of the reactor was higher than normal pressure by 1.0 $kgf/cm^2$ (absolute pressure: 1495.6 mmHg). Then, the temperature of the reactor was raised to 220 °C over 90 minutes, maintained at 220 °C for 2 hours, and then raised to 265 °C over 2 hours. Thereafter, an esterification reaction proceeded for 468 minutes until the mixture in the reactor became transparent with the naked eye while maintaining the temperature of the reactor at 265 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

### Step 3) Polycondensation

Then, the pressure of the 7 L reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.65 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

## Example 8

### Step 1) Preparation of r-BHET solution

r-BHET (40.9 g) and EG (80 g) were uniformly mixed at 25 °C to prepare an r-BHET solution (33.80 wt%).

### Step 2) Esterification

The above prepared r-BHET solution, TPA (2643.1 g), EG (249.1 g), CHDM (1158.0 g), and ISB (587.0 g) were placed in a 10 L reactor to which a column, and a condenser capable of being cooled by water were connected, and $GeO_2$ (1.0 g) as a catalyst, phosphoric acid (1.46 g) as a stabilizer, Polysynthren Blue RLS (manufactured by Clarient, 0.020 g) as a blue toner, and Solvaperm Red BB (manufactured by Clarient, 0.008 g) as a red toner were added thereto.
Then, nitrogen was injected into the reactor to form a pressurized state in which the pressure of the reactor was higher than normal pressure by 0.5 $kgf/cm^2$ (absolute pressure: 1127.8 mmHg). Then, the temperature of the reactor was raised to 220 °C over 90 minutes, maintained at 220 °C for 2 hours, and then raised to 260 °C over 2 hours.

Thereafter, an esterification reaction proceeded for 594 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Example 9**

**Step 1) Preparation of r-BHET solution**

r-BHET (3418.5 g) and EG (200 g) were uniformly mixed at 150 °C to prepare an r-BHET solution (94.47 wt%).

**Step 2) Esterification**

The above-prepared r-BHET solution, TPA (957.5 g), DMT (dimethyl terephthalate; 1119.0 g), EG (145.7 g), CHDM (221.5 g), and ISB (84.2 g) were placed in a 10 L reactor to which a column, and a condenser capable of being cooled by water were connected, and Mn(II) acetate tetrahydrate (1.5 g) and $Sb_2O_3$ (1.8 g) as a catalyst, and cobalt acetate (0.7 g) as a coloring agent were added thereto.
Then, nitrogen was injected into the reactor to bring the pressure of the reactor to normal pressure. Then, the temperature of the reactor was raised to 220 °C over 90 minutes, maintained at 220 °C for 2 hours, and then raised to 240 °C over 2 hours. Thereafter, an esterification reaction proceeded for 126 minutes until the mixture in the reactor became transparent with the naked eye while maintaining the temperature of the reactor at 240 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 265 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.
The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200°C at a rate of 40°C/hour, and maintained at 200 °C. The solid-phase polymerization reaction was performed until the intrinsic viscosity (IV) of the particles in the reactor reached 0.95 dl/g to prepare a polyester copolymer.

**Example 10**

**Step 1) Preparation of r-BHET solution**

r-BHET (3461.1 g) and water (1500 g) were uniformly mixed at 95 °C to prepare an r-BHET solution (69.76 wt%).

**Step 2) Esterification**

The above-prepared r-BHET solution, TPA (969.4 g), IPA (isophthalic acid; 2262.0 g), EG (12.1 g), CHDM (140.2 g), and ISB (113.7 g) were placed in a 10 L reactor to which a column, and a condenser capable of being cooled by water were connected, and $GeO_2$ (1.0 g) as a catalyst, and cobalt acetate (0.7 g) as a coloring agent were added thereto.
Then, nitrogen was injected into the reactor to form a pressurized state in which the pressure of the reactor was higher than normal pressure by 3.0 kgf/cm$^2$ (absolute pressure: 2966.7 mmHg). Then, the temperature of the reactor was raised to 220 °C over 90 minutes, maintained at 220 °C for 2 hours, and then raised to 260 °C over 2 hours. Thereafter, an esterification reaction proceeded for 203 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.
The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 190 °C at a rate of 40 °C/hour, and maintained at 190 °C. The solid-phase polymerization reaction was performed until the intrinsic viscosity (IV) of the particles in the reactor reached 1.0 dl/g to prepare a polyester copolymer.

**Comparative Example 1**

**Step 1) Preparation of r-BHET solution**

r-BHET (390.7 g) and water (2500 g) were uniformly mixed at 100 °C to prepare an r-BHET solution (13.52 wt%).

**Step 2) Esterification**

The above-prepared r-BHET solution, TPA (2936.3 g), EG (1400.7 g), CHDM (221.5 g), and ISB (98.2 g) were placed in a 10 L reactor to which a column, and a condenser capable of being cooled by water were connected, and $GeO_2$ (1.0 g) as a catalyst and phosphoric acid (1.46 g) as a stabilizer were added thereto.
Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 260 °C over 2 hours. Thereafter, an esterification reaction proceeded for 720 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. After maintaining at 100 mmHg for 1 hour, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.70 dl/g to prepare a polyester copolymer.

**Comparative Example 2**

**Step 1) Preparation of r-BHET solution**

r-BHET (1587.3 g) and EG (1500 g) were uniformly mixed at 50 °C to prepare an r-BHET solution (51.41 wt%).

**Step 2) Esterification**

The above-prepared r-BHET solution, TPA (2420.6 g), EG (198.4 g), CHDM (150.0 g), and ISB (106.4 g) were placed in a 10 L reactor to which a column, and a condenser capable of being cooled by water were connected, and $GeO_2$ (1.0 g) as a catalyst, phosphoric acid (1.46 g) as a stabilizer and cobalt acetate (0.7 g) as a coloring agent were added thereto.

Then, nitrogen was injected into the reactor to form a pressurized state in which the pressure of the reactor was higher than normal pressure by 1.0 kgf/cm² (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded for 920 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.95 dl/g to prepare a polyester copolymer.

**Comparative Example 3**

**Step 1) Preparation of r-BHET solution**

r-BHET (304.1 g) and water (1000 g) were uniformly mixed at 70 °C to prepare an r-BHET solution (23.32 wt%).

**Step 2) Esterification**

The above-prepared r-BHET solution, TPA (2640.8 g), EG (583.3 g), CHDM (1231.6 g), and ISB (25.0 g) were placed in a 10 L reactor to which a column, and a condenser capable of being cooled by water were connected, and $Ge_2O$ (1.0 g) as a catalyst, phosphoric acid (1.46 g) as a stabilizer, Polysynthren Blue RLS (manufactured by Clarient, 0.012 g) as a blue toner, and Solvaperm Red BB (manufactured by Clarient, 0.004 g) as a red toner were added thereto.
Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 255 °C over 2 hours. Thereafter, an esterification reaction proceeded for 850 minutes until the mixture in the reactor became transparent with the naked eye while maintaining the temperature of the reactor at 255 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Comparative Example 4**

**Step 1) Preparation of r-BHET solution**

r-BHET (3193.6 g) and water (6000 g) were uniformly mixed at 85 °C to prepare an r-BHET solution (34.74 wt%).

**Step 2) Esterification**

The above-prepared r-BHET solution, TPA (623.4 g), and ISB (95.4 g) were placed in a 10 L reactor to which a column, and a condenser capable of being cooled by water were connected, and $Ge_2O$ (1.0 g) as a catalyst, phosphoric acid (1.46 g) as a stabilizer, Polysynthren Blue RLS (manufactured by Clarient, 0.010 g) as a blue toner, and Solvaperm Red BB (manufactured by Clarient, 0.003 g) as a red toner were added thereto.
Then, nitrogen was injected into the reactor to form a pressurized state in which the pressure of the reactor was higher than normal pressure by 0.1 kgf/cm$^2$ (absolute pressure: 833.5 mmHg). Then, the temperature of the reactor was raised to 220 °C over 90 minutes, maintained at 220 °C for 2 hours, and then raised to 260 °C over 2 hours. Thereafter, an esterification reaction proceeded for 650 minutes until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 3) Polycondensation**

Then, the pressure of the 7 L reactor was reduced from normal pressure to 5 Torr (absolute pressure: 5 mmHg) over 30 minutes, and the temperature of the reactor was raised to 270 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.65 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 220 °C at a rate of 40 °C/hour, and maintained at 220 °C. The solid-phase polymerization reaction was performed until the intrinsic viscosity (IV) of the particles in the reactor reached 0.85 dl/g to prepare a polyester copolymer.

**Experimental examples**

Physical properties of the polyester copolymers prepared in Examples and Comparative Examples were evaluated as follows.

1) Residue composition

The residue composition (mol%) derived from acid and diol in the polyester resin was confirmed through 1 H-NMR spectrum obtained at 25 °C using a nuclear magnetic resonance apparatus (JEOL, 600 MHz FT-NMR) after dissolving the sample in a $CDCl_3$ solvent at a concentration of 3 mg/mL. In addition, the residue of TMA was confirmed by quantitative analysis of spectrum in which the content of benzene-1,2,4-triethylcarboxylate produced by the reaction of ethanol with TMA through ethanolysis was measured at 250 °C using gas chromatography (Agilent Technologies, 7890B). And, it was confirmed as the content (wt%) based on a total weight of the polyester resin.

2) Intrinsic viscosity

After dissolving the polyester copolymer in orthochlorophenol (OCP) at a concentration of 0.12% at 150 °C, the intrinsic viscosity was measured in a constant temperature bath at 35 °C using an Ubbelohde viscometer. Specifically, a temperature of the viscometer was maintained at 35 °C, and the time taken (efflux time; $t_0$) for a solvent to pass between certain internal sections of the viscometer and the time taken (t) for a solution to pass the viscometer were measured. Subsequently, a specific viscosity was calculated by substituting $t_0$ and t into Formula 1, and the intrinsic viscosity was calculated by substituting the calculated specific viscosity into Formula 2.

$$[\text{Formula 1}]$$

$$\eta_{sp} = \frac{t - t_0}{t_0}$$

$$[\text{Formula 2}]$$

$$[\eta] = \frac{\sqrt{1 + 4A\eta_{sp}} - 1}{2Ac}$$

(3) Pellet color L-b

The chromaticity and brightness of the sample were measured using Varian Cary 5 UV/Vis/NIR spectrophotometer equipped with a diffuse reflection accessory. Polyester resin pellets were prepared, and reflection data was obtained with Illuminant D65 at an observer angle of 2°. This was processed using a color analysis device in the Grams/32 software to calculate Hunter L*a*b* values, and the results (L-b) by subtracting the b value from the L value were described in the table below.

The results are shown in Table 1 below.

[Table 1]

|  | r-BHET | ISB | CHDM | IV | Plaque Color L-b |
|---|---|---|---|---|---|
| Unit | wt% | mol% | mol% | dg/l | - |
| Example 1 | 30 | 2 | 8 | 0.70 | 68 |
| Example 2 | 75 | 2 | 5 | 0.95 | 65 |
| Example 3 | 80 | 0 | 4 | 0.80 | 60 |
| Example 4 | 14 | 0 | 5 | 0.85 | 66 |
| Example 5 | 50 | 0 | 30 | 0.70 | 65 |
| Example 6 | 42 | 0 | 20 | 0.80 | 67 |
| Example 7 | 22 | 3 | 50 | 0.65 | 65 |
| Example 8 | 1 | 15 | 50 | 0.80 | 63 |
| Example 9 | 69 | 2 | 8 | 0.95 | 60 |
| Example 10 | 75 | 2 | 5 | 1.00 | 60 |
| Comparative Example 1 | 9 | 2 | 8 | 0.70 | 58 |
| Comparative Example 2 | 29 | 2 | 5 | 0.95 | 54 |
| Comparative Example 3 | 7 | 1 | 50 | 0.75 | 55 |
| Comparative Example 4 | 82 | 4 | 0 | 0.85 | 59 |

**Claims**

1. A method for preparation of a polyester copolymer comprising:

    1) preparing a recycled bis-2-hydroxyethyl terephthalate solution by dissolving recycled bis-2-hydroxyethyl terephthalate in water or ethylene glycol (step 1);
    2) preparing an oligomer by an esterification reaction of the recycled bis-2-hydroxyethyl terephthalate solution, a dicarboxylic acid or its derivative, and a diol containing ethylene glycol and a comonomer (step 2); and
    3) preparing a polyester copolymer by a polycondensation reaction of the oligomer (step 3),

    wherein a molar ratio of the diol and the dicarboxylic acid or its derivative is 0.2:1 to 1.35:1.

2. The method of Claim 1,
   wherein a concentration of the recycled bis-2-hydroxyethyl terephthalate solution is 25 to 99 wt%.

3. The method of Claim 1,
   wherein the recycled bis-2-hydroxyethyl terephthalate is dissolved in water at 25 to 100 °C in step 1.

4. The method of Claim 1,
   wherein the recycled bis-2-hydroxyethyl terephthalate is dissolved in ethylene glycol at 25 to 197 °C in step 1.

5. The method of Claim 1,
   wherein the dicarboxylic acid or its derivative is terephthalic acid, dimethyl terephthalic acid, isophthalic acid, 2,6-naphthalenedicarboxylic acid, diphenyl dicarboxylic acid, 4,4'-stilbenedicarboxylic acid, 2,5-furandicarboxylic acid, or 2,5-thiophenedicarboxylic acid.

6. The method of Claim 1,
wherein the comonomer is cyclohexanedimethanol, or isosorbide.

7. The method of Claim 1,
wherein a molar ratio of the comonomer and ethylene glycol is 0.1:1 to 20:1 in step 2.

8. The method of Claim 1,
wherein the step 2 is performed at a pressure of 0.1 to 3.0 $kg/cm^2$ and a temperature of 200 to 300 °C.

9. The method of Claim 1,
wherein the step 2 is performed for 2 hours to 10 hours.

10. The method of Claim 1,
wherein the step 3 is performed at a temperature of 240 to 300 °C and a pressure of 400 to 0.01 mmHg.

11. The method of Claim 1,
wherein the step 3 is performed for 1 hour to 10 hours.

12. The method of Claim 1,
wherein the prepared polyester copolymer comprises 1 to 80 wt% of the residue of the recycled bis-2-hydroxyethyl terephthalate.

13. The method of Claim 1,
wherein the prepared polyester copolymer has an intrinsic viscosity of 0.50 to 1.0 dl/g.

## INTERNATIONAL SEARCH REPORT

| International application No. |
|---|
| **PCT/KR2021/012491** |

### A. CLASSIFICATION OF SUBJECT MATTER

**C08G 63/60**(2006.01)i; **C08G 63/78**(2006.01)i

According to International Patent Classification (IPC) or to both national classification and IPC

### B. FIELDS SEARCHED

Minimum documentation searched (classification system followed by classification symbols)

C08G 63/60(2006.01); C07C 67/52(2006.01); C07C 69/82(2006.01); C08G 63/181(2006.01); C08G 63/183(2006.01); C08G 63/80(2006.01); C08G 63/86(2006.01); C08J 11/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재사용 비스-2-히드록시에틸테레프탈레이트(r-BHET), 디카르복실산 (dicarboxylic acid), 에틸렌 글리콜(ethylene glycol), 공단량체(comonomer), 디올(diol), 폴리에스테르(polyester), 에스테르 화(esterification), 축중합(polycondensation)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0061948 A (LOTTE CHEMICAL CORPORATION) 03 June 2020 (2020-06-03)<br>See abstract; paragraphs [0037], [0040], [0041] and [0067]-[0069]; claims 1, 5 and 7; manufacturing example 1; and table 2. | 1-13 |
| A | US 2004-0019234 A1 (INADA, S. et al.) 29 January 2004 (2004-01-29)<br>See paragraph [0107]; and claims 1, 16 and 35. | 1-13 |
| A | KR 10-1306581 B1 (WOONGJIN CHEMICAL CO., LTD.) 11 September 2013 (2013-09-11)<br>See claims 1 and 3; and example 1. | 1-13 |
| A | CN 111138641 A (CHINA PETROLEUM & CHEMICAL CORPORATION et al.) 12 May 2020 (2020-05-12)<br>See claims 1-10; and example 1. | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 December 2021** | **28 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/012491** |

**C.    DOCUMENTS CONSIDERED TO BE RELEVANT**

| Category* | Citation of document, with indication, where appropriate, of the relevant passages | Relevant to claim No. |
|---|---|---|
| A | CN 107459630 A (TIANJIN FANGFEI PLASTIC PRODUCTS CO., LTD.) 12 December 2017 (2017-12-12)<br>See claim 1; and example 1. | 1-13 |

Form PCT/ISA/210 (second sheet) (July 2019)

## INTERNATIONAL SEARCH REPORT
### Information on patent family members

International application No.

**PCT/KR2021/012491**

| Patent document cited in search report | | | Publication date (day/month/year) | Patent family member(s) | | | Publication date (day/month/year) |
|---|---|---|---|---|---|---|---|
| KR | 10-2020-0061948 | A | 03 June 2020 | None | | | |
| US | 2004-0019234 | A1 | 29 January 2004 | AT | 275538 | T | 15 September 2004 |
| | | | | AU | 1800500 | A | 05 March 2001 |
| | | | | AU | 764053 | B2 | 07 August 2003 |
| | | | | CA | 2318761 | A1 | 04 February 2001 |
| | | | | CN | 1195727 | C | 06 April 2005 |
| | | | | CN | 1320113 | A | 31 October 2001 |
| | | | | CN | 1511821 | A | 14 July 2004 |
| | | | | CN | 1511823 | A | 14 July 2004 |
| | | | | DE | 69920025 | T2 | 08 September 2005 |
| | | | | EP | 1120394 | A1 | 01 August 2001 |
| | | | | EP | 1120394 | B1 | 08 September 2004 |
| | | | | ES | 2228142 | T3 | 01 April 2005 |
| | | | | HK | 1040236 | A1 | 31 May 2002 |
| | | | | ID | 26736 | A | 08 February 2001 |
| | | | | JP | 2001-048834 | A | 20 February 2001 |
| | | | | JP | 2001-048835 | A | 20 February 2001 |
| | | | | JP | 2001-048836 | A | 20 February 2001 |
| | | | | JP | 2001-048837 | A | 20 February 2001 |
| | | | | JP | 3782905 | B2 | 07 June 2006 |
| | | | | JP | 3782906 | B2 | 07 June 2006 |
| | | | | JP | 3782907 | B2 | 07 June 2006 |
| | | | | KR | 10-0701842 | B1 | 02 April 2007 |
| | | | | KR | 10-0740059 | B1 | 16 July 2007 |
| | | | | KR | 10-0740060 | B1 | 16 July 2007 |
| | | | | KR | 10-2001-0086254 | A | 10 September 2001 |
| | | | | KR | 10-2006-0107858 | A | 16 October 2006 |
| | | | | KR | 10-2006-0107859 | A | 16 October 2006 |
| | | | | TW | 506968 | B | 21 October 2002 |
| | | | | US | 6630601 | B1 | 07 October 2003 |
| | | | | US | 7193104 | B2 | 20 March 2007 |
| | | | | WO | 01-10812 | A1 | 15 February 2001 |
| | | | | WO | 01-10812 | A9 | 26 April 2001 |
| KR | 10-1306581 | B1 | 11 September 2013 | KR | 10-2012-0133037 | A | 10 December 2012 |
| CN | 111138641 | A | 12 May 2020 | None | | | |
| CN | 107459630 | A | 12 December 2017 | None | | | |

Form PCT/ISA/210 (patent family annex) (July 2019)